# EUROPEAN PATENT APPLICATION

(11) **EP 3 431 742 A1**
(43) Date of publication of application: **23.01.2019**
(21) Application number: 18184313.7
(22) Date of filing: 18.07.2018
(51) Int. Cl.: F02D 41/00, F02D 41/32, F02D 13/02, F02D 37/02, F02D 41/14, F02D 15/00, F02D 35/02

(54) **AUGMENTED COMPRESSION ENGINE (ACE)**

(30) Priority: 18.07.2017 US 201715652853
(71) Applicant: Koponen, Niilo William Alexander, Fairbanks, AK 99709-5701 (US)
(72) Inventor: Koponen, Niilo William Alexander, Fairbanks, AK 99709-5701 (US)
(74) Representative: Verscht, Thomas Kurt Albert

(57) **Abstract**

Unlike similar internal combustion engines that vary the fuel-air mixture, the Augmented Compression Engine (ACE) first and foremost sets and maintains an optimal stoichiometric fuel to air ratio, relying upon various implementations of Boyle's law to attain ignition of the stoichiometric fuel-air mixture in the combustion chamber while varying quantities of the fuel-air mixture to adjust output power.

An ACE uses fuel-air mixed prior to attainment of auto-ignition temperatures in the combustion chamber, compresses it and achieves ignition by an ignition source or use of compression heating the fuel-air to its auto-ignition temperature. Since different quantities of the fuel-air mix are needed for different loads (power outputs), to maintain reliable ignition the ACE uses one or more of: varying intake pressure; valve timing; recycled exhaust or other implementations of Boyle's law for adjusting compression such as, injected matter, modifying fuel or changing of combustion chamber volume.

## Description

### BACKGROUND

This application relates to internal combustion engines as used for powering transportation, generators, tools and such other uses as people see fit to use them for.

### PRIOR ART

Hydrocarbon fuel powered internal combustion engines (ICE) with closed combustion chambers have powered transportation, tools and many other uses over the last century. Typically using pistons, other varieties of closed combustion chamber internal combustion engines do exist but are rare. Power is achieved by mixing the fuel with air, ignition of the fuel via spark (as used in Otto cycle engines) or compression (as used in Diesel cycle engines), and using the resulting exothermic reaction to provide mechanical power. These engines modify the fuel to air ratio to increase or decrease power. A rich mixture giving more power but also resulting in more carbon monoxide pollution and in diesels particulate matter as well, a lean mixture producing less power and combining oxygen and nitrogen via endothermic reactions into the undesirable byproducts of nitric oxide and nitrogen dioxide.

Otto cycle engines mix the fuel with the air outside the combustion chamber, move it into the combustion chamber, compress it but not to the point of auto-ignition and ignite it by means of a spark. To vary the power produced the quantity of air as well as the ratio of fuel in the mix is regulated, often resulting in less than optimal fuel-air mixtures. Spark ignited internal combustion engines with their relatively slow flame front combustion are designed to waste some of their power opposing the rising piston in order to maximize the force during the power stroke. They sometimes suffer from the undesired problem of knocking, a condition wherein the pressure and heat from the expanding flame front causes detonation of yet unburnt fuel-air mixture.

Diesel cycle engines intake air into the combustion chamber, compress the air to heat it to or past the temperature of auto-ignition for the fuel and then directly inject the fuel into the combustion chamber. Power is varied by regulating how much and how fast the fuel is injected. Diesel engines often operate at a non-optimal fuel to air ratios. A diesel engine, due to its direct injection of fuel into the high temperature and pressure conditions of the combustion chamber, does not allow enough time for proper mixing of fuel with air. The higher compression and combustion pressures require diesels to be built more sturdily than Otto cycle engines.

Both types can be built with or without a blower such as a supercharger or turbocharger to put more air into the intake increasing how much goes into the combustion chamber. Historically diesel and spark ignition internal combustion engines have problems getting complete combustion and subsequently exhaust byproducts other than carbon dioxide, nitrogen, water and argon. These unwanted byproducts require expensive additional devices to decrease the pollution the engines put out. The loss of power due to incomplete combustion and the pollution remediation devices is considerable and is effectively a waste of resources.

Other designs, all using variable fuel-air mixtures, of internal combustion engines have been invented but found little use. Several designs utilize two opposed pistons in the same cylinder. One design has a piston shuttling back and forth in a cylinder between two combustion chambers and transferring energy via electrical generation. Another design transfers the linear energies from a ring of pistons to a wobble plate.

The Wankel Rotary Engine is perhaps the most unique variation, being a variable volume progressing cavity system on an eccentric shaft. Basically poor seals, then later poor fuel economy and difficulty passing emissions standards resulted in little adaption of the type. It also used variable fuel-air mixtures.

### SUMMARY

An augmented compression engine (ACE) is a closed combustion chamber internal combustion engine design modified to ensure optimal stoichiometric fuel-air ratio in the combustion. ACEs maintain optimal fuel-air mix ratio while under varying loads using intake pressure to regulate how much fuel-air mix is taken into the combustion chamber, augmented by such things as valve timing, exhaust gases retained in the combustion chamber, exhaust gases recirculated into the intake, matter (typically water) injection into the intake, modification of the fuel-air mixture, direct injection of matter (typically water or alcohol) into the combustion chamber or change in volume of the combustion chamber.

Lower pressure ACE design relies upon supplemental ignition and uses flame front combustion. A lower pressure ACE is effectively a spark ignition internal combustion engine that maintains optimal mixture ratio and uses intake pressure and one or more of valve timing, retained exhaust or other above mentioned techniques for varying power.

High pressure ACE design uses compression to near simultaneously ignite (detonate) the fuel-air mixture despite using less fuel-air mixture while not at full load. In reciprocating piston internal combustion engine form a high pressure ACE is effectively a diesel that instead of direct injection of fuel into the cylinder, mixes its fuel-air mixture before compression induced auto-ignition in the combustion chamber, attains desired fuel-air ignition temperature via compression or with compression and with supplemental ignition of part of the fuel-air mixture, this causing attainment of desired heat and compression to detonate the rest of the fuel-air mixture. When operating at less than full power the compression is augmented by one or more of the above mentioned techniques.

Other variant ICE designs can similarly be modified to ACE designs. Modifications using currently available technology in use in the industry are sufficient to implement and construct many ACE designs.

### DRAWINGS

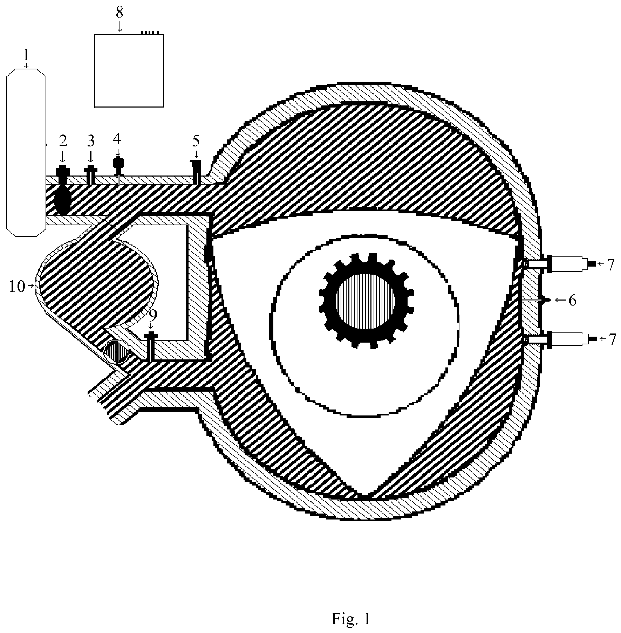

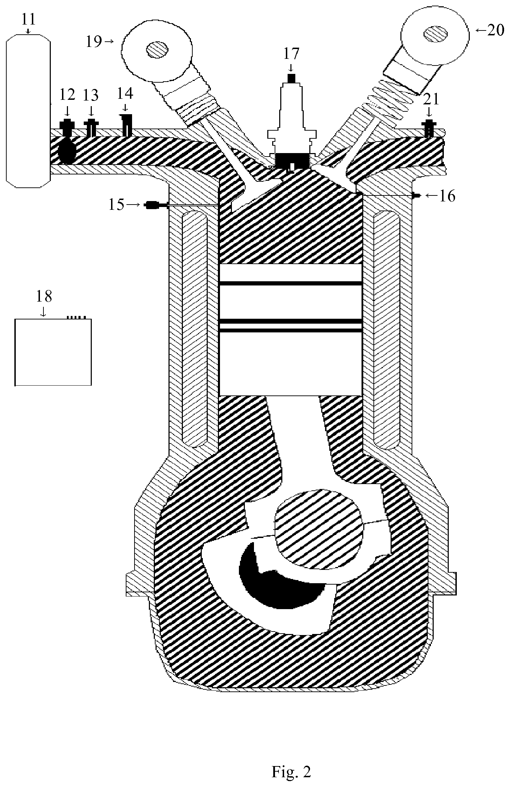

Fig. 1 Title - ACE modified Wankel internal combustion engine
   1 Variable Pressure Air Blower (Supercharger/Turbocharger)
   2 air intake valve
   3 Fuel Injector
   4 Water Injector
   5 Pressure/Temperature Sensor
   6 Ignition Sensor
   7 Spark Plug
   8 Computer
   9 Oxygen sensor/air-fuel ratio meter
   10 Exhaust gas recirculation system with valves
Fig. 2 Title - ACE modified diesel internal combustion engine
   11 Variable Pressure Air Blower (Supercharger/Turbocharger)
   12 air intake valve
   13 Fuel Injector
   14 Pressure/Temperature Sensor
   15 Water Injector
   16 Ignition Sensor
   17 Spark Plug
   18 Computer
   19 Variable Timing Intake Valve
   20 Variable Timing Exhaust Valve
   21 oxygen sensor/air-fuel ratio meter

### DETAILED DESCRIPTION

### ADVANTAGES

In comparison to present internal combustion engines, Augmented Compression Engines (ACE) make more power from fuel while resulting in less pollution. This in turn makes better use of a limited resource and improves our environment. ACEs can be made using items readily available in the industry. Many internal combustion engines may be suitable to be retrofitted into ACE designs.

### FIRST EMBODIMENT ACE modified Wankel Rotary

Starting with the design of a Wankel rotary internal combustion engine, the following modifications are made: Design rotor and housing to get the desired compression ratio; install air intake valve (2); set the desired fixed ratio for the fuel-air mixture; install an external exhaust gas recirculation system (10) able to select how much exhaust is diverted into the intake; install an oxygen sensor or air-fuel ratio meter (9) in exhaust manifold to monitor and provide feedback for carburator/fuel injector operation; install or update computer (8) and wiring to handle the data input, calculations and control; water injection (4) may be added if calculations or experience show that production of oxides of nitrogen will be too high or if desired for power. Adding a variable blower (1) is another option to broaden the power band.

### OPERATION - FIRST EMBODIMENT

Set maximum power to the maximum amount of air-fuel mixture with no exhaust recycling that the engine will handle without problems. For lower throttle settings progressively adjust settings to intake less fuel-air mixture and recycle more exhaust. Use water injection as appropriate.

An ACE is used as other internal combustion engines are used. Powering transportation, generators, tools and such other uses as people see fit to use it for.

### SECOND EMBODIMENT ACE modified Piston Engine with spark ignition

Starting with the design of a blower and piston using diesel internal combustion engine, the following modifications are made:
Set the desired compression ratio, choosing the stroke length of the piston and cylinder diameter as well as the shape and volume of the combustion chamber that remains at full compression, according to the compression, water cooling desired and auto-ignition temperature for the fuel- air mixture that is planned to be used; add a variable pressure control capability to the blower (11); install air intake valve (12); install fuel injection (13) in the intake path; install a pressure sensor (14) in the intake path; install a temperature sensor (14) in the intake path; add variable valve timing (19-20); replace direct fuel injector in the combustion chamber with a water injector (15); install an ignition sensor in the combustion chamber (16); install a spark plug in the combustion chamber (17); install oxygen or air-fuel ratio meter after exhaust valve (21); install wiring and a computer (18) to read data from throttle; sensors, valves and crank positions. Program the computer to use the data to calculate and control settings for blower pressure, fuel injector, various valve settings and timings, spark timing and water injector settings.

### OPERATION - SECOND EMBODIMENT

Set fuel injection to optimal fuel-air mixture ratio. Set maximum blower intake pressure setting to where the maximum compression of the fuel-air mixture, cooled by injection of water, is just below the point that auto-ignition of the fuel-air mixture occurs after ignition (avoid detonation). Set valve timings to maximize intake input into and exhaust ejection from the combustion chamber without wasting intake out the exhaust. Set water injection for appropriate cooling of fuel-air mixture after valves close and compression or combustion ongoing. For lower throttle settings progressively adjust settings to intake less fuel-air mixture, retain more exhaust and adjust all other settings appropriately.

An ACE is used as other internal combustion engines are used. Powering transportation, generators, tools and such other uses as people see fit to use it for.

### THIRD EMBODIMENT ACE modified Piston Engine with spark ignition, compression combustion

Starting with the design of a blower and piston using diesel internal combustion engine, the following modifications are made:
Set the desired compression ratio, choosing the stroke length of the piston and cylinder diameter as well as the shape and volume of the combustion chamber that remains at full compression, according to the compression, water cooling desired and auto-ignition temperature for the fuel- air mixture that is planned to be used; add a variable pressure control capability to the blower (11); install air intake valve (12); install fuel injection (13) in the intake path; install a pressure sensor in the intake path (14); install a temperature sensor 14) in the intake path; add variable valve timing (19-20); replace direct fuel injector in the combustion chamber with a water injector (15); install an ignition sensor in the combustion chamber (16); install a spark plug (17); install oxygen or air-fuel ratio meter after exhaust valve (21); install wiring and a computer to read data from throttle; sensors (18), valves and crank positions. Program the computer to use the data to calculate and control settings for blower pressure, fuel injector, valve settings and timings, spark timing and water injector settings.

### OPERATION - THIRD EMBODIMENT

Set fuel injection to optimal fuel-air mixture ratio. Set maximum blower intake pressure setting to where the maximum compression of the fuel-air mixture, cooled by injection of water, is just below the auto-ignition temperature of the fuel-air mixture, achieving the point where minimal increase in pressure and temperature from ignition of part of the fuel-air mixture will detonate the rest of the fuel-air mixture. Set valve timings to maximize exhaust ejection and intake input from the combustion chamber without wasting intake out the exhaust. Set water injection for appropriate cooling of fuel-air mixture after valves close and compression or combustion ongoing. For lower throttle settings progressively adjust settings to intake less fuel-air mixture, retain more exhaust and adjust all other settings appropriately.

An ACE is used as other internal combustion engines are used. Powering transportation, generators, tools and such other uses as people see fit to use it for.

### FOURTH EMBODIMENT ACE modified Piston Engine with compression combustion

Starting with the design of a blower and piston using diesel internal combustion engine, the following modifications are made:
Set the desired compression ratio, choosing the stroke length of the piston and cylinder diameter as well as the shape and volume of the combustion chamber that remains at full compression, according to the compression, water cooling desired and temperature for the fuel-air mixture that is planned to be used; add a variable pressure control capability to the blower (11); install air intake valve (12); install fuel injection (13) in the intake path; install a pressure sensor (14) in the intake path; install a temperature sensor (14) in the intake path; add variable valve timing (19-20); change direct fuel injection to direct water injection (15); install an ignition sensor in the combustion chamber (16); install oxygen or air-fuel ratio meter (21) after exhaust valve; install wiring and a computer (18) to read data from throttle; intake pressure/temperature; ignition sensor, valves and crank positions. Using the data to calculate and control settings for blower pressure, fuel injector, valve setting and timings as well as water injector settings.

### OPERATION - FOURTH EMBODIMENT

Set fuel injection to optimal fuel-air mixture ratio. Set maximum blower pressure setting to where the maximum compression of the fuel-air mixture, cooled by injection of water, is just at the detonation causing pressures/temperature of the fuel-air mixture. Set valve timings to maximize exhaust ejection and intake input from the combustion chamber without wasting intake out the exhaust. Set water injection for appropriate cooling of fuel-air mixture. For lower throttle settings progressively adjust settings to intake less fuel-air mixture, retain more exhaust and adjust all other settings appropriately.

An ACE is used as other internal combustion engines are used. Powering transportation, tools and such other uses as people see fit to use it for.

### RAMIFICATIONS

Fuel-air mixtures have an optimal stoichiometric mixture. This can be accomplished via proper use of carburetor or fuel injection, many types of which exist. This is somewhat simplified in most implementations of ACE since one does not have to worry about varying the mixture or directly injecting the fuel into a high pressure, high temperature environment. Combining fuel with air in advance of entering the combustion chamber allows for more thorough mixing and more complete combustion resulting in more power and less unwanted byproducts. Of course one could directly inject a lower auto-ignition temperature fuel to augment ignition but should adjust the fuel-air mixture when doing so.

Use of an oxygen sensor or air-fuel ratio meter to provide feedback to the carburetor or fuel injector will help maintain the optimal stoichiometric ratio of fuel to air.

Different fuels have different flash points and auto-ignition temperatures. This has to be taken into account when determining compression ratio in the design and intake pressure. With piston engines to set the desired compression ratio, one chooses the stroke length of the piston and cylinder diameter as well as the shape and volume of the combustion chamber that remains at full compression. Physically decreasing the volume that remains will, other things staying the same, decrease by a small amount how much fuel-air mixture can enter while increasing the pressure and thus temperature of the gases when compressed. There are numerous ways to vary the combustion chamber size.

Some fuels are more exothermic when combining with oxygen than others. If multiple injectors are used, the process of mixing different fuels in predetermined ratios is simple. Changing the ratio of such fuels results in different flash points and auto-ignition temperatures as well as more or less power.

Since different fuels have different flash points and auto-ignition temperatures, engines will have to be designed for specific fuels or with the capability to vary the temperatures and pressures in the intake and combustion chamber(s) to account for the variations in fuels used.

Construction of an ACE is basic engineering once you have decided upon a fuel, compression ratio, combustion volume and whether to include intake or direct injection cooling. Once the maximum combustion pressure and temperature is calculated the material structural needs can be determined. Choice of which methods of insuring ignition at lower throttle settings to incorporate will determine the modifications necessary to essential ICE design.

Different combinations of choices amongst whether to have a blower and if so what type, multi- fuel injectors, coolant intake or injection, valve control (will camless valves be necessary?), whether and how to recycle exhaust and cylinder head design give a multitude of different design possibilities, some being better at low throttle ignition than others.

The Wankel design can be modified to have an intake valve allowing finer control just as valves can be added to some 2-cycle designs. Indeed, with proper controls some ACE designs could transition back and forth between 2-cycle and 4-cycle operation.

While valve timings can determine how much exhaust is left in the combustion chamber, a design may choose to recycle exhaust gases into the intake after they have left the combustion chamber. Many exhaust gas recirculation systems designed for pollution controls demonstrate how to recycle the exhaust. Note that combining exhaust and fuel-air mix should be done at a temperature that will not ignite the fuel-air mixture until desired in the combustion chamber. Volume expansion and water injection can be used to help control temperatures.

Compression ignition results in near simultaneous ignition or detonation of the fuel-air mixture. Until it can be expelled out the exhaust, the combusted mixture is an expanding mass of very hot molecules. These molecules apply pressure that will turn the crankshaft. They also lose temperature as the volume increases and to the surfaces around them.

Adding water vapor in with the fuel-air mixture allows more fuel-air mixture into the combustion chamber as it will absorb heat, particularly in turning to steam, taking more pressure to get to ignition temperature. Alcohol or other ingredients can also be used. Combustion temperatures over 1500 Celsius result in increasing amounts of oxygen combining with nitrogen rather than with fuel. This is wasteful, reducing power and increasing pollution. Adding water via direct injection into the combustion chamber can not only help control temperatures, by converting to steam it can add power due to the high expansion rate it undergoes. A spray of hot pressurized water, turning into steam may be used instead of a spark to make the jump in compression needed to initiate the combustion of the fuel-air mixture.

Compression ignition, timed correctly, results in a stronger power stroke. The near simultaneous combustion also results in a reduction in unwanted byproducts of combustion. Sturdier construction along with high pressure lubrication or improved bearings may be required to handle the higher pressure of the stronger power stroke. Moving the ignition further after the point of maximum compression will decrease stress on the engine. Wear reduction may be assisted by pressure peaks in lubrication timed to offset the pressure peaks of power strokes. Due to the high pressures in piston engines it is suggested that use of a single piece combining cylinder and cylinder head be used, eliminating the possibility of head gasket failure.

Note that the use of ceramic coating as a material that will transfer little heat to and from the fuel-air mixture is suggested for the combustion chamber surfaces. This increases efficiency and exhaust cleanliness by decreasing quenching of the combustion near those surfaces and of heat transfer to the surfaces. Less heat transferred to the surfaces equates to less energy needed to cool the engine. It should also decrease the possibility of premature auto-ignition. Ceramic coatings also protect against the high temperatures of a stoichiometric combustion.

In multicylinder ACEs various combustion chambers can be "shut off' momentarily or continuously by keeping the valves closed and not injecting anything into the cylinder when running at low power, Wankel ACEs can shut off fuel-air intake and keep the exhaust recirculation closed. Single chamber ACEs may use a flywheel to keep rotational energy when purposefully skipping firing opportunities at low power.

Air temperatures and pressures vary, particularly as one changes altitude the quantity of air that a particular intake setup may provide to the combustion may vary. This could result in non-optimal fuel-air mixtures or pressures. Thus it behooves one to use an intake setup that can take into account varying air pressures, temperatures and even moisture content of the incoming air. A simple feedback loop that adjusts the pressure of the incoming air or fuel-air mixture based on minute changes in observed ignition timing may be adequate. Adjusting for other data such as the temperatures of the incoming fuel-air mixture, the oxygen content in the exhaust temperature and numerous other data may provide a more complete and accurate way to set the pressures of the air-fuel mixture and other settings. This is particularly important when starting at less than full throttle and the exhaust gases are at a lower temperature than usual.

To get the needed quantity of air into the system one can rely upon air pressure to push air in during the intake stroke or one can blow (by such means as a supercharger or turbocharger) air into the combustion chamber(s). The disadvantage of using a set compression ratio is that as altitude and subsequent air pressure varies, the amount of air being pushed into the combustion chamber will vary as well unless pressure regulation is used. Some superchargers and turbochargers are inadequate as they do not have the variable control of the pressure required to compensate for varying air pressure and still get a specific amount of fuel-air mixture into the cylinder.

For engines in environments that do not change in air pressure much (say in a ship), the amount of change required can be accomplished via a modification to the cylinder head that can reduce or increase its volume a small amount at command. For more changeable environments (such as an airplane) an air pump (blower) such as a supercharger or turbocharger that can vary its output upon command may be necessary.

Many spark ignition and diesel engines have exhaust gas recirculation systems already, primarily for meeting emission standards. Modification of these type systems should be adequate for reintroduction of exhaust gases into the cylinders via combining with the fuel-air mixture. The heat and pressure of the exhaust used for recycling can be controlled by valves, sizing, placement as well as use of heat exchangers and insulating materials. The inclusion of a device for preventing exhaust flame from reaching the fuel-air mixture may be desired for safety.

Changing pumping pressure via supercharger or turbocharger could be accomplished in a number of ways as well. Examples: Valve controlling air intake; electric motor power for the pump or enhancement of the pump with variable control of the power; variable settings/adjustments for the blades of the air pump; increase or decrease of the gap around the fan blades; bypass of the pump with controllable valve (wastegates); et cetera.

ACE design can use data from a full panoply of sensors and control mechanisms to determine which sensors and control mechanisms are required and which are not. With enough data at various conditions a simple set of controls can be set to keep optimal operation while accounting for the conditions.

Utilizing compression combustion or augmented compression combustion gets the most power out of the fuel but has to be designed with the detonation of the fuel-air mixture in mind.

The invention may be summarized as follows: Unlike similar internal combustion engines that vary the fuel-air mixture, the Augmented Compression Engine (ACE) first and foremost sets and maintains an optimal stoichiometric fuel to air ratio, relying upon various implementations of Boyle's law to attain ignition of the stoichiometric fuel-air mixture in the combustion chamber while varying quantities of the fuel- air mixture to adjust output power. An ACE uses fuel-air mixed prior to attainment of auto-ignition temperatures in the combustion chamber, compresses it and achieves ignition by an ignition source or use of compression heating the fuel-air to its auto-ignition temperature. Since different quantities of the fuel-air mix are needed for different loads (power outputs), to maintain reliable ignition the ACE uses one or more of: varying intake pressure; valve timing; recycled exhaust or other implementations of Boyle's law for adjusting compression such as, injected matter, modifying fuel or changing of combustion chamber volume.

### SCOPE

Closed combustion chamber internal combustion engine designs can be modified to be an ACE. All the required parts (variable valve timing, pressure sensor, computer, et cetera) are already in use in the industry, though some will be improved by modification. Many variations of these modifications are possible. ACE techniques with direct injection of fuel into the combustion chamber can also be used but retain the diesel's problem in getting adequate mixing of fuel and air.

### CONCLUSION

By optimizing the fuel-air mixture throughout the power curve this relatively simple modification to internal combustion engine design makes better use of a limited resource and results in less pollution.

## Claims

1. A method of converting chemical energy to mechanical energy utilizing a closed combustion chamber type internal combustion engine via the specific mode comprising of:
a. control of quantity of air intake,
b. combining fuel with the air mixed at a predetermined (optimally stoichiometric) ratio,
c. combining of said fuel-air mixture before compression reaches auto-ignition temperature of the fuel-air mixture in the combustion chamber,
d. compression of the gases in the combustion chamber,
e. ignition of the gases by a method selected from the group consisting of more pressure and electromagnetic excitation of fuel or air molecules (exemplified by spark plugs) and matter injection and sonic pulse and physical introduction of very hot surfaces or catalysts that help initiate combustion,
f. maintaining predetermined fuel-air mixture ratio under varying loads and quantities of said fuel-air mixture entered into the combustion chamber, via various methods selected from the group consisting of control of the intake pressure of the mixture admitted to the combustion chamber and the timing of the intake and the timing of the exhaust and a change in the ratio of fuel-air mixture ingredients that changes the auto-ignition temperature and a change in the ratio of fuel-air mixture ingredients that changes the power of the exothermic reaction and recycling of predetermined quantities of exhaust gases and modifying the temperature of the incoming mixture and adding matter to the fuel-air mixture and injecting matter directly into the combustion chamber (if combustible matter added, the predetermined fuel-air ratio should be modified to account for this) and a change in the combustion chamber volume and changing the timing of the ignition,
whereby said design can vary how much predetermined (optimally stoichiometric) air-fuel mixture is admitted into the combustion chamber whilst accomplishing the ignition of said air-fuel mixture, providing the exothermic reaction that provides the mechanical power the augmented compression engine is useful for.
